# EUROPÄISCHE PATENTSCHRIFT

(11) **EP 1 276 658 B1**
(45) Veröffentlichungstag und Bekanntmachung des Hinweises auf die Patenterteilung: **29.09.2004**
(21) Anmeldenummer: 00969247.6
(22) Anmeldetag: 25.08.2000
(51) Int. Cl.: B62D 53/00

(54) **VERSCHIEBEVORRICHTUNG FÜR SATTELKUPPLUNGEN**
SLIDING DEVICE FOR A FIFTH WHEEL
DISPOSITIF DE COULISSEMENT POUR SELLETTE D'ATTELAGE

(30) Priorität: 17.09.1999 DE 19944684
(43) Veröffentlichungstag der Anmeldung: 22.01.2003
(73) Patentinhaber: Jost-Werke GmbH & Co. KG, 60528 Frankfurt am Main (DE)
(72) Erfinder: ALGÜERA GALLEGO, José, Manuel, 63739 Aschaffenburg (DE); SPITZ, Rainer, 65347 Eltville (DE)
(74) Vertreter: Fuchs Mehler Weiss & Fritzsche
(86) Internationale Anmeldenummer: PCT/EP2000/008304
(87) Internationale Veröffentlichungsnummer: WO 2001/021469

(56) Entgegenhaltungen:
- EP-A- 0 018 790
- EP-A- 0 503 954
- US-A- 4 697 844
- US-A- 5 344 173

## Beschreibung

Die Erfindung betrifft eine Verschiebevorrichtung für Sattelkupplungen mit einem die Sattelkupplung tragenden Oberteil und mit einem unter dem Oberteil angeordneten Grundrahmen.

Verschiebeeinrichtungen sind Vorrichtungen, die die Sattelkupplung tragen und es erlauben, diese in Fahrzeuglängsrichtung zu verschieben und in verschiedenen Positionen zu verrasten. Derartige Verschiebeeinrichtungen sind beispielsweise aus der DE-AS 17 80 488 oder der EP 0 503 954 A bekannt.

Sattelzugmaschinen verfügen im Regelfall über Rahmenkonstruktionen, die aus zwei nach innen offenen C-Profilen bestehen, die mit Querträgern verbunden sind. An diesen Hauptrahmen werden im Regelfall zwei Hilfsrahmen befestigt, an die wiederum Aufbaukomponenten, wie z.B. Verschiebeeinrichtungen befestigt werden können. Letztere verfügen meistens über flach ausgebildete Grundrahmen, die mit dem Hilfsrahmen verschraubt oder verschweißt werden.

Das Gesamtsystem besteht somit aus drei Baugruppen, der Sattelkupplung, der Verschiebeeinrichtung und dem Hilfsrahmen. Hierzu wird zunächst der Hilfsrahmen beim Hersteller der Sattelzugmaschine an den Hauptrahmen geschraubt und dann wird die Verschiebeeinrichtung mit der darauf montierten Sattelkupplung an dem Hilfsrahmen befestigt.

Der gesamte Rahmenaufbau des Fahrzeugs unterliegt in seinen Gesamtabmessungen, insbesondere in seiner Breite gewissen Schwankungen, die durch unvermeidliche maßliche Toleranzen als auch durch bewußt eingesetzte unterschiedliche Materialstärken bei den verwendeten Bauteilen verursacht werden.

Die Aufgabe der vorliegenden Erfindung besteht darin, diesen maßlichen Toleranzen Rechnung zu tragen und gleichzeitig das Gesamtgewicht des Systems Fahrzeugrahmen/Verschiebesystem sowie den Montageaufwand durch eine verbesserte Verschiebevorrichtung zu reduzieren.

Die Aufgabe wird mit einer Verschiebevorrichtung gelöst, bei der der Grundrahmen zwei sich in Längsrichtung erstreckende Winkelprofile aufweist, die über zwei lösbar und verschieblich angeordnete Traversen miteinander verbunden sind und bei der jedes Winkelprofil erste Haltemittel aufweist, die mit zweiten Haltemitteln des Oberteils derart zusammenwirken, daß das Oberteil in Längs- und Querrichtung relativ zum Grundrahmen verschiebbar ist.

Längs- und Querrichtung beziehen sich auf die Fahrzeuglängs- bzw. Quersachse.

Dadurch, daß der Grundrahmen Winkelprofile aufweist, kann er ohne zusätzlichen Hilfsrahmen unmittelbar an dem Hauptrahmen der Sattelzugmaschine befestigt werden. Toleranzen bezüglich des Abstandes der beiden Rahmen der Sattelzugmaschine können dadurch ausgeglichen werden, daß die Traversen verschiebbar angeordnet sind. Dies kann vorzugsweise dadurch erreicht werden, daß die Traversen Langlöcher aufweisen, so daß eine Anpassung an unterschiedliche Rahmenbreiten ermöglicht wird.

Dadurch, daß das Gewicht des Hilfsrahmens vollständig entfällt, wird das Gesamtgewicht des Systems Fahrzeugrahmen plus Verschiebevorrichtung deutlich reduziert. Der Fahrzeughilfsrahmen kann dadurch eingespart werden, daß der erfindungsgemäße Grundrahmen dessen Funktion übernimmt, wodurch auch der Montageaufwand vermindert wird. Hierbei bleiben sowohl die technologischen Voraussetzungen (Ausrüstung) am Endmontageband als auch die konstruktive Gestaltung des Hauptrahmens beim Zugmaschinenhersteller unverändert.

Die Oberteile der Verschiebeeinrichtung sind in der Regel starr, so daß keine Anpassungen an unterschiedliche Rahmenbreiten der Sattelzugmaschine möglich sind. Ändert sich die Fahrzeugbreite, wird die Breite des Grundrahmens durch eine Verstellung der Traversen angepaßt. Ein starres Oberteil erfordert eine relative Verschiebbarkeit zwischen diesem und dem Grundrahmen. Um dies zu ermöglichen, weist jedes Winkelprofil erste Haltemittel auf, die mit den zweiten Haltemitteln des Oberteils in der Weise zusammenwirken, daß das Oberteil nicht nur in Fahrzeuglängsrichtung aufgeschoben werden kann sondern auch zur Anpassung der unterschiedlichen Breiten, die durch die Rahmenkonstruktion der Sattelzugmaschine letztendlich vorgegeben sind, in Querrichtung verschiebbar ist.

Dies wird gemäß einer bevorzugten Ausführungsform dadurch erreicht, daß auf dem Winkelprofil eine Schiene angeordnet ist, die einen aufragenden Schenkelkörper mit einem nach innen weisenden Schenkel sowie einem nach außen weisenden Schenkel umfaßt. Im einfachsten Fall kann eine T-Schiene verwendet werden, es besteht aber auch die Möglichkeit, gemäß einer anderen Ausführungsform die beiden Schenkel in vertikaler Richtung versetzt, anzuordnen.

Die zweiten Haltemittel, die an der Unterseite des Oberteils angeordnet sind, sind diese Schenkel umgreifende Bügel. Hierbei wird die Abstimmung der Bügel und der Schenkel in der Weise vorgenommen, daß in horizontaler Richtung zwischen den Schenkeln und den Bügeln Zwischenräume vorhanden sind, die eine Verschiebung in Querrichtung zulassen. Hierbei umgreifen die Bügel die Schenkel soweit, daß eine Verschiebbarkeit des Oberteils nach innen oder nach außen möglich ist, ohne daß die Bügel den Eingriff der Schenkel verlassen.

Gemäß einer weiteren Ausführungsform kann der innere Schenkel oder der äußere Schenkel eine Rastleiste bilden. Am Oberteil sind ein oder mehrere Blockierstücke vorgesehen, die in der vorgesehenen Position des Oberteils in die Rastleiste eingreifen und somit das Oberteil fixieren.

Vorzugsweise bilden das Winkelprofil, der Schienenkörper und einer der beiden Schenkel ein einstückiges Bauteil. Dadurch wird die Herstellung weiter vereinfacht.

Beispielhafte Ausführungsformen der Erfindung werden nachfolgend anhand der Zeichnungen näher erläutert.

Es zeigen:
- Figur 1: eine perspektivische Darstellung des Rahmens der Sattelzugmaschine mit der darauf angeordneten Verschiebevorrichtung,
- Figur 2: eine Draufsicht auf die rechte Seite der in Figur 1 gezeigten Anordnung im Ausschnitt,
- Figur 3a, 3b und 3c: jeweils einen Schnitt längs der Linie III-III der in Figur 1 gezeigten Vorrichtung, und
- Figur 4: eine Schnittdarstellung gemäß einer weiteren Ausführungsform.

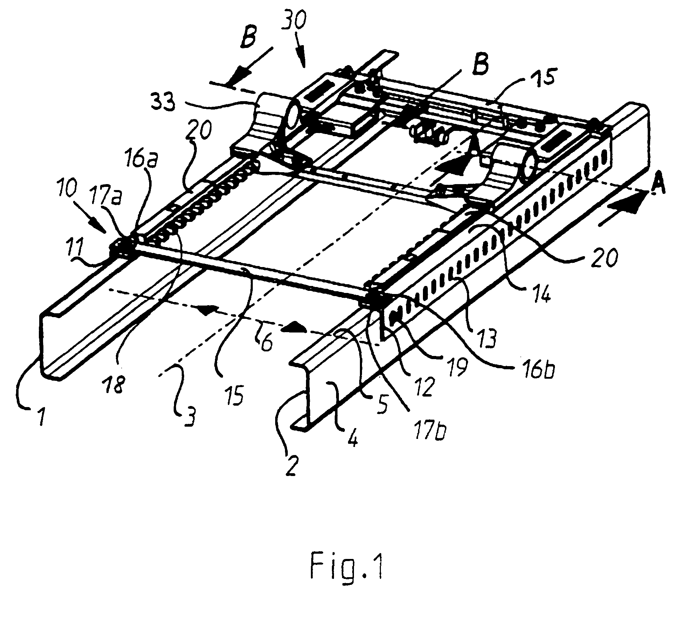

In der Figur 1 ist schematisch die Rahmenkonstruktion einer Sattelzugmaschine dargestellt, auf der eine Verschiebevorrichtung montiert ist. Die Rahmenkonstruktion der Saltelzugmaschine besteht aus zwei Fahrzeugrahmen 1 und 2, die ein nach innen offenes C-förmiges Profil aufweisen. Die Fahrzeuglängsrichtung ist mit 3 gekennzeichnet, die mit der Längsrichtung der Verschiebevorrichtung übereinstimmt.

Auf dieser Rahmenkonstruktion der Sattelzugmaschine ist ein Grundrahmen 10 befestigt, der zwei Winkelprofile 11 und 12 aufweist, die über Traversen 15 miteinander verbunden sind. Diese Traversen 15 besitzen jeweils zwei Langlöcher 16a, b, deren Längsachse sich in Querrichtung 6 erstreckt. Mittels Befestigungsschrauben 17a, b sind die Traverse 15 auf den beiden Winkelprofilen 11 und 12 befestigt. Die beiden Winkelprofile 11,12 sind auf den Fahrzeugrahmen 1 und 2 so angeordnet, daß der vertikale Schenkel 13 an der Außenseite 4 und der horizontale Schenkel 14 auf der Oberseite 5 des jeweiligen Fahrzeugrahmens 1, 2 aufliegt. Die Befestigung der Winkelprofile 11, 12 erfolgt mittels Schrauben 19. Die Traversen 15 bilden auch den vorderen und hinteren Anschlag für das Oberteil 30.

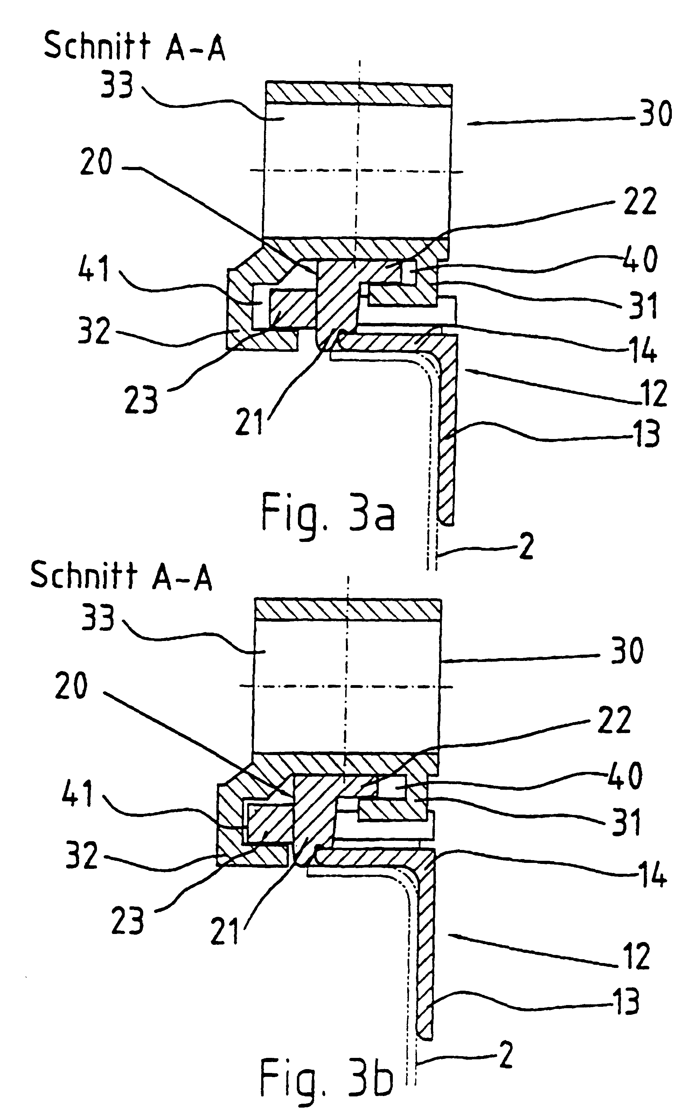

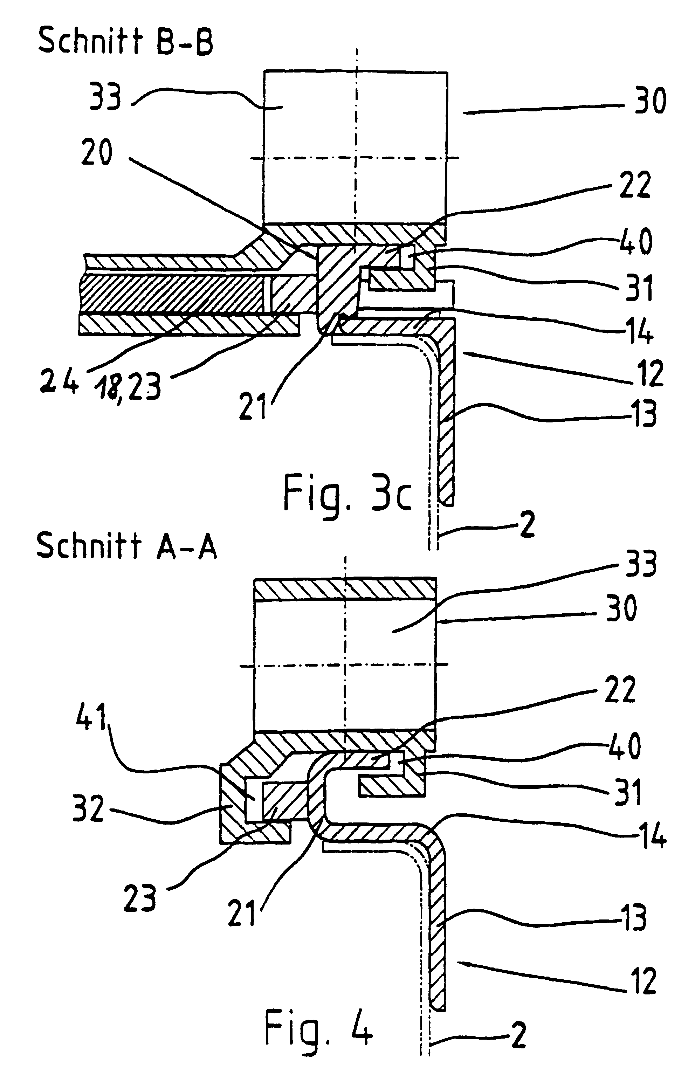

Ferner ist auf der Oberseite des horizontalen Schenkels 14 eine Schiene 20 befestigt, die im Detail in den Figuren 3a, b und c sowie der Figur 4 erläutert wird. Auf dieser Schiene 20 ist das Oberteil 30 sowohl in Längsrichtung 3 als auch in Querrichtung 6 verschiebbar angeordnet. Hierzu weist das Oberteil 30 an seiner Unterseite Innen- und Außenbügel 32 bzw. 31 auf, die ebenfalls im Zusammenhang mit den Figuren 3a, b und c sowie der Figur 4 näher erläutert werden. Das Oberteil 30 bildet einen auf dem Grundrahmen 10 verfahrbaren Schlitten

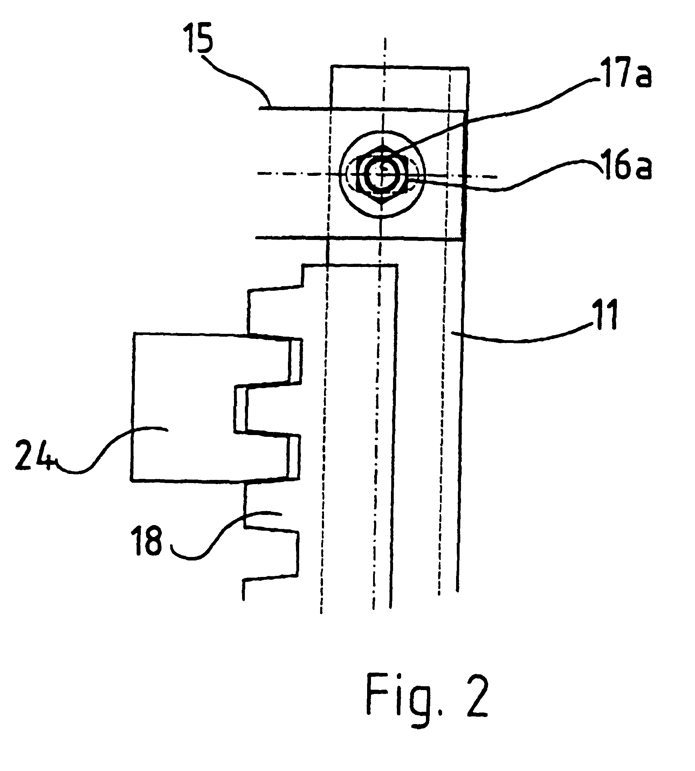

In der Figur 2 ist die Draufsicht auf einen der beiden Fahrzeugrahmen dargestellt, auf denen einer der beiden Winkelprofile 11 befestigt ist. An diesen Winkelprofilen 11 ist die Traverse 15 mit dem Langloch 16a und der Befestigungsschraube 17a befestigt.

Ferner ist noch die Rastleiste 18 zu sehen, die an der nicht dargestellten Schiene befestigt ist und die mit einem Blockierstück 24 zusammenwirkt, das eine entsprechende Verrahmung aufweist und am Oberteil befestigt ist.

In der Figur 3a ist ein Schnitt längs der Linie III-III durch die in der Figur 1 gezeigte Anordnung dargestellt, wobei der Schnitt durch den Lagerbock verläuft, an dem die (nicht dargestellte) Sattelkupplung befestigt ist. Der rechte Fahrzeugrahmen 2 ist lediglich gestrichelt dargestellt. Auf diesem Fahrzeugrahmen 2 ist das Winkelprofil 12 befestigt, auf dem eine Schiene 20 mit dem nach oben ragenden Schienenkörper 21 aufgeschweißt ist, der einen nach innen weisenden Schenkel 23 und einen nach außen weisenden Schenkel 22 aufweist. In vertikaler Richtung sind diese beiden Schenkel 22 und 23 versetzt zueinander angeordnet.

Das Oberteil 30 besitzt an seiner Unterseite jeweils zwei Bügel 32 und 31, die die jeweiligen Schenkel 23 und 22 untergreifen. Zwischen den Schenkeln 22 und dem vertikalen Abschnitt des Bügels 31 sowie zwischen dem Schenkel 23 und dem vertikalen Abschnitt des Bügels 32 sind Zwischenräume 40 und 41 vorhanden, die die Verschiebbarkeit in Fahrzeugquerrichtung ermöglichen.

Wenn, wie in der Figur 3a dargestellt ist, die Rahmenkonstruktion der Sattelzugmaschine in etwa der Breite des Oberteils entspricht, sind die beiden Zwischenräume 41 und 40 in etwa gleich groß.

Wenn jedoch, wie in der Figur 3b dargestellt ist, der Abstand der Rahmen 1 und 2 deutlich geringer ist, als dies für das Oberteil 30 vorgesehen ist, kann dies dadurch ausgeglichen werden, daß aufgrund der Verschiebbarkeit des Oberteils 30 auf der Schiene 20 der Zwischenraum 41 veringert und der Zwischenraum 40 vergrößert wird. Es müssen daher keine Umbauten, weder am Grundrahmen noch am Oberteil vorgenommen werden.

Die Fixierung des Oberteils auf dem Grundrahmen erfolgt über die bereits im Zusammenhang mit der Figur 2 erwähnten Rastleiste 18 und dem Blockierstück 24. In der Figur 3c ist eine Ausführungsform dargestellt, bei der Innenschenkel 23 als Rastleiste 18 ausgebildet ist. Es ist auch möglich stattdessen den Außenschenkel 22 als Rastleiste vorzusehen. Das Blockierstück 24 müßte in diesem Fall im Bügel 31 gelagert werde.

In der Figur 4 ist eine weitere Ausführungsform dargestellt, bei der das Winkelprofil 12 in den Schienenkörper 21 und in den Außenschenkel 22 übergeht. Man erhält einen S-förmigen Querschnitt des einstückigen Winkelschienenbauteils. Dadurch wird die Herstellung weiter vereinfacht. An der Innenseite des Schienenkörpers 21 ist der Innenschenkel 23 angeschweißt. Ansonsten entspricht die Anordnung der in den Figuren 3a und 3b gezeigten Anordnung.

### Bezugszeichen

- 1: linker Fahrzeugrahmen
- 2: rechter Fahrzeugrahmen
- 3: Fahrzeuglängsrichtung
- 4: Außenseite
- 5: Oberseite
- 6: Querrichtung
- 10: Grundrahmen
- 11: Winkelprofil
- 12: Winkelprofil
- 13: vertikaler Schenkel
- 14: horizontaler Schenkel
- 15: Traverse
- 16a, b: Langloch
- 17a, b: Befestigungsschraube
- 18: Rastleiste
- 19: Befestigungsschraube
- 20: Schiene
- 21: Schienenkörper
- 22: Außenschenkel
- 23: Innenschenkel
- 24: Blockierstück
- 30: Oberteil
- 31: Außenbügel
- 32: Innenbügel
- 33: Lagerbock
- 40: Zwischenraum
- 41: Zwischenraum

## Patentansprüche

1. Verschiebevorrichtung für Sattelkupplungen mit einem die Sattelkupplung tragenden und die Verstelleinrichtung aufweisenden Oberteil (30) und mit einem unter dem Oberteil (30) angeordneten Grundrahmen (10),
**dadurch gekennzeichnet,**
**daß** der Grundrahmen (10) zwei sich in Längsrichtung erstreckende Winkelprofile (11, 12) aufweist, die über zwei lösbar und verschieblich angeordnete Traversen (15) miteinander verbunden sind, und
**daß** jedes Winkelprofil (11, 12) erste Haltemittel (20 - 23) aufweist, die mit zweiten Haltemitteln (31, 32) des Oberteils (30) derart zusammenwirken, daß das Oberteil (30) in Längs- und in Querrichtung relativ zum Grundrahmen (10) verschiebbar ist.

2. Vorrichtung nach Anspruch 1, **dadurch gekennzeichnet, daß** die ersten Haltemittel jeweils eine auf dem Winkelprofil angeordnete Schiene (20) mit einem aufragenden Schienenkörper (21) und mit einem Innenschenkel (23) und einem Außenschenkel (22) umfassen, und daß die zweiten Haltemittel an der Unterseite des Oberteils (30) diese Schenkel (22, 23) umgreifende Bügel (31, 32) umfassen.

3. Vorrichtung nach Anspruch 2, **dadurch gekennzeichnet, daß** die beiden Schenkel (22, 23) in vertikaler Richtung versetzt angeordnet sind.

4. Vorrichtung nach einem der Ansprüche 2 oder 3, **dadurch gekennzeichnet, daß** der Innenschenkel (23) oder der Außenschenkel (22) eine Rastleiste (18) bildet.

5. Vorrichtung nach einem der Ansprüche 2 bis 4, **dadurch gekennzeichnet, daß** das Winkelprofil (11, 12), der Schienenkörper (21) und einer der beiden Schenkel (21 oder 23) ein einstückiges Bauteil bilden.

6. Vorrichtung nach einem der Ansprüche 1 bis 5, **dadurch gekennzeichnet, daß** die Traversen (15) Langlöcher (16a, b) aufweisen.

## Claims

1. A sliding device for fifth-wheel couplings, with an upper part (30) that carries the fifth-wheel coupling and has the adjusting device, and with a base frame (10) that is arranged underneath the upper part (30),
**characterized in**
**that** the base frame (10) has two angle sections (11, 12) that extend in the longitudinal direction and are connected to one another by two cross-members (15) that are arranged in a releasable and displaceable fashion, and in
**that** each angle section (11, 12) has first holding means (20-23) that co-operate with second holding means (31, 32) of the upper part (30) in such a way that the upper part (30) can be displaced relative to the base frame (10) in longitudinal and in transverse direction.

2. Device according to Claim 1, **characterized in that** the first holding means respectively comprise, arranged on the angle section, a track (20) with an upwardly projecting track body (21) and with an inner limb (23) and an outer limb (22), and **in that** the second holding means comprise brackets (31, 32) on the underside of the upper part (30) and embracing these limbs (22, 23).

3. The device according to Claim 2, **characterized in that** the two limbs (22, 23) are vertically offset relative to one another.

4. Device according to Claim 2 or 3, **characterized in that** the inner limb (23) or the outer limb (22) forms a locking rail (18).

5. Device according to one of Claims 2 to 4, **characterized in that** the angle section (11, 12), the track body (21) and one of the two limbs (21 or 23) form a one-piece component.

6. Device according to one of Claims 1 to 5, **characterized in that** the cross-members (15) have oblong holes (16a, b).

## Revendications

1. Dispositif de manoeuvre pour sellettes d'attelage, comportant une partie supérieure (30) supportant la sellette d'attelage et présentant le dispositif de réglage et un châssis de base (10) disposé sous la partie supérieure (30),
**caractérisé en ce que**
le châssis de base (10) présente deux profilés en équerre (11, 12) s'étendant dans le sens longitudinal qui sont reliés l'un à l'autre par deux traverses (15) disposées de manière détachable et mobile et
que chaque profilé en équerre (11, 12) présente des premiers moyens de retenue (20-23) qui coopèrent avec des seconds moyens de retenue (31, 32) de la partie supérieure (30) de manière à ce que la partie supérieure (30) soit déplaçable dans le sens longitudinal et transversal relativement au châssis de base (10).

2. Dispositif selon la revendication 1, **caractérisé en ce que** les premiers moyens de retenue comprennent respectivement un rail (20) disposé sur le profité en équerre, comportant un corps de rail porteur (21) et une branche intérieure (23) et une branche extérieure (22), et que les deuxièmes moyens de retenue comprennent des étriers (31, 32) entourant ces branches (22, 23) sur le côté inférieur de la partie supérieure (30).

3. Dispositif selon la revendication 2, **caractérisé en ce que** les deux branches (22, 23) sont disposées décalées dans le sens vertical.

4. Dispositif selon l'une quelconque des revendications 2 ou 3, **caractérisé en ce que** la branche intérieure (23) ou la branche extérieure (22) constitue une baguette d'enclenchement (18).

5. Dispositif selon l'une quelconque des revendications 2 à 4, **caractérisé en ce que** le profilé en équerre (11, 12) des corps de rail (21) et une des deux branches (21 ou 23) forment une composante en une pièce.

6. Dispositif selon l'une quelconque des revendications 1 à 5, **caractérisé en ce que** les traverses (15) présentent des trous longitudinaux (16a, b).
